# EUROPEAN PATENT APPLICATION

(11) **EP 1 841 154 A2**
(43) Date of publication of application: **03.10.2007**
(21) Application number: 06016673.3
(22) Date of filing: 09.08.2006
(51) Int. Cl.: H04L 25/02

(54) **Wireless base station and wireless terminal**

(30) Priority: 31.03.2006 JP 2006097330
(71) Applicant: Fujitsu Ltd., Kawasaki-shi, Kanagawa 211-8588 (JP)
(72) Inventor: Watanabe, Masahiro, Kawasaki-shi Kanagawa 211-8588 (JP)
(74) Representative: Sunderland, James Harry

(57) **Abstract**

A wireless base station which receives packet signals in every timeslot from a plurality of wireless terminals, has a calculating unit which calculates, from one packet signal, a parameter used for demodulating the packet signal, a storage unit which stores the parameter, and an averaging processing unit which calculates, when demodulating the packet signal in a certain timeslot with respect to one of the plurality of wireless terminals, an average value from the parameter obtained from the packet signal and from the parameters stored in the storage unit and obtained from the packet signals at one or more timeslots allocated to one of the plurality of wireless terminals and discontinuous from the certain timeslot, and which outputs the average value as the parameter used for the demodulating process.

## Description

### BACKGROUND OF THE INVENTION

### 1. Field of the Invention

The present invention relates to a wireless base station and a wireless terminal that are applied to a packet communication system utilized mainly for wireless communications.

### 2. Description of the Related Art

In a field of the wireless communications over the recent years, data communications employing mobile phones and a wireless LAN (Local Area Network) have been rapidly expansively utilized. The packet communication system is broadly used as an effective communication means on the occasion of performing the wireless communications for the purpose of the data communications.

In the case of performing the wireless communications consecutively in time between the terminal station and the base station, it is known that the quality can be improved by executing an averaging process by using information for a plurality of slots of continuous reception timings (e.g. , Non-Patent document 1). On the other hand, in the packet communications, a communication partner terminal station is different between timeslots. Therefore, in the case of executing a receiving packet demodulating process, the information used for the receiving process is calculated based on a signal within one packet that should be demodulated.
[Patent document 1] Japanese Unexamined Patent Publication No.2005-531247
[Patent document 2] Japanese Patent Application Laid-Open Publication No.2000-201371
[Non-Patent document 1] Hidehiro Ando, and three others, "Experimental performance of coherent RAKE receiver using weighted multi-slot averaging pilot symbol-assisted channel estimation for DS-CDMA", General Conference of the Institute of Electronics, Information and Communication Engineers, 1998, B-5-91, p455.

### SUMMARY OF THE INVENTION

It is an object of the present invention to improve a communication quality through optimizing a demodulating process of a packet signal on a receiving side in packet communications between a wireless base station and a wireless terminal.

The present invention adopts the followingmeans in order to accomplish the object described above.

Namely, a first mode of the present invention is a wireless base station receiving packet signals at every timeslot from a plurality of wireless terminals, comprising a calculating unit calculating, from one packet signal, a parameter used for a process of demodulating the packet signal, a storage unit stored with the parameter, and an averaging processing unit calculating, when executing the demodulating process of the packet signal at a certain timeslot with respect to one of the plurality of wireless terminals, an average value of the parameters from the parameter obtained from the packet signal and from the parameters stored in the storage unit and obtained from the packet signals at one or more timeslots allocated to one of the plurality of wireless terminals and discontinuous from the certain timeslot, and outputting the average value as the parameter used for the demodulating process.

According to the present invention, the wireless base station outputs the average value of the parameters obtained from the packet signals at the plurality of discontinuous timeslots as the parameter used for the demodulating process. Accuracy of the parameter value can be improved by using the average value. Accordingly, the demodulating process can be executed more properly than in the case of executing the demodulating process by use of the parameter obtained from one packet signal. Hence, the communication quality can be enhanced.

Preferably, the wireless base station according to the present invention further comprise a weighting unit weighting, by the standard of the parameter corresponding to the certain timeslot, the plurality of parameters for calculating the average value.

Preferably, the weighting unit applies a heaviest weight to the parameter corresponding to the certain timeslot, and applies a weight getting smaller as a time interval from the certain timeslot becomes larger to the parameter corresponding to one or more timeslots.

The accuracy of the parameter can be more enhanced by applying the weight to each of the averaging target parameter values.

A second mode of the present invention is a wireless terminal performing communications with a wireless base station transmitting packet signals to a plurality of wireless terminals at every timeslot, comprising a calculating unit calculating, from one packet signal received from the wireless base station and transmitted to a target terminal, a parameter used for a process of demodulating the packet signal, a storage unit stored with the parameter, and an averaging processing unit calculating, when executing the demodulating process of the packet signal at a certain timeslot allocated to the target terminal, an average value of the parameters from the parameter obtained from the packet signal and from the parameters stored in the storage unit and obtained from the packet signals at one or more timeslots allocated to the target terminal and discontinuous from the certain timeslot, and outputting the average value as the parameter used for the demodulating process.

### [Effects of the invention]

According to the present invention, it is possible to improve the communication quality through optimizing the demodulating process of the packet signal on the receiving side in the packet communications between the wireless base station and the wireless terminal.

### BRIEF DESCRIPTION OF THE DRAWINGS

FIG. 1 is an explanatory diagram of uplink communications in a communication system to which the present invention can be applied;
FIG. 2 is a diagram showing an example of averaging channel estimation values when consecutively receiving packets from the same terminal station;
FIG. 3 is a diagram showing an example of timeslot allocation when performing packet communications (a case of not consecutively receiving the packets from the same terminal station) and an example of calculating a channel estimation value;
FIG. 4 is an explanatory diagram of downlink communications in the communication system illustrated in FIG. 1;
FIG. 5 is an explanatory diagram of the principle of the base station according to a first embodiment;
FIG. 6 is a diagram showing an example of an averaging process of the channel estimation values that is executed by the base station depicted in FIG. 5;
FIG. 7 is a diagram showing a first specific example of the base station shown in FIG. 5 and also showing a configuration for averaging the channel estimation values;
FIG. 8 is a diagram showing an example of a format of packet data used in the first specific example;
FIG. 9 is a flowchart showing an example of a flow of a channel estimation value averaging process executed by the base station illustrated in FIG. 7;
FIG. 10 is a diagram showing an example of a configuration of a retaining unit (a channel estimation value retaining unit) shown in FIG. 7 and showing an example of a data structure in a storage area of the retaining unit;
FIG. 11 is a diagram showing a second specific example of the base station shown in FIG. 5 and showing a configuration for averaging frequency offset estimation values;
FIG. 12 is a diagram showing a third specific example of the base station shown in FIG. 5 and showing a configuration for averaging the frequency offset estimation values;
FIG. 13 is a diagram showing a fourth specific example of the base station shown in FIG. 5 and showing a configuration for averaging packet arrival direction estimation values;
FIG. 14 is a diagram of a principle configuration of the terminal station according to a second embodiment;
FIG. 15 is an explanatory diagram of a method (a first notifying method) by which a control station or the base station notifies the terminal station of the slot allocation information;
FIG. 16 is an explanatory diagram of a method (a second notifying method) by which the control station or the base station notifies the terminal station of the slot allocation information;
FIG. 17A is a diagram showing the first specific example of the terminal station illustrated in FIG. 14 and showing a configuration for averaging the channel estimation values;
FIG. 17B is a diagram showing the first specific example of the control station or the base station illustrated in FIG. 14;
FIG. 18 is a flowchart showing an example of a flow of a channel estimation value averaging process executed by the terminal station illustrated in FIG. 17A;
FIG. 19A is an explanatory diagram of a control packet format applied to the second specific example of the principle configuration shown in FIG. 14;
FIG. 19B is an explanatory diagram of a normal packet format applied to the second specific example of the principle configuration shown in FIG. 14;
FIG. 20A is a diagram showing the second specific example of the terminal station illustrated in FIG. 14 and showing a configuration for averaging the channel estimation values;
FIG. 20B is a diagram showing the second specific example of the control station or the base station shown in FIG. 14; and
FIG. 21 is a flowchart showing an example of a flow of a channel estimation value averaging process executed by the terminal station illustrated in FIG. 20A.

### DETAILED DESCRIPTION OF THE PREFERRED EMBODIMENTS

Embodiments of the present invention will hereinafter be described with reference to the drawings. Configurations in the following embodiments are exemplifications, and the present invention is not limited to the configurations in the embodiments.

### [Detailed Circumstances of the Invention]

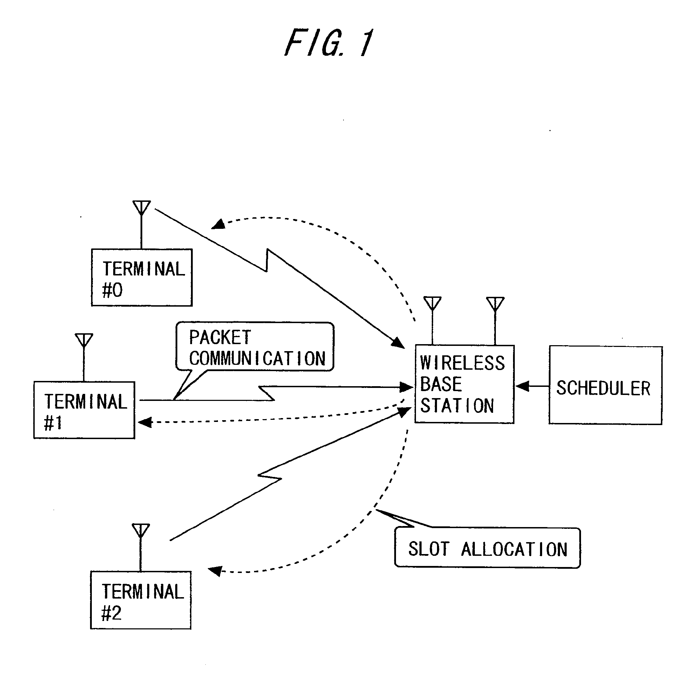

FIG. 1 is a conceptual diagram of a communication system to which the present invention can be applied. In FIG. 1, wireless terminal stations (terminal stations: terminal devices) #0 - #2 transmit packets to a wireless base station (a base station: a base station device) (uplink communications). A scheduler manages information on timeslots employed for the respective terminal stations to transmit the packets to the base station, and notifies the base station and each of the terminal stations of slot allocation information. A packet receiving process and a packet transmitting process are executed based on the slot allocation information between the base station and each of the terminal stations. Note that there might be a case in which the scheduler is implemented as part of the base station.

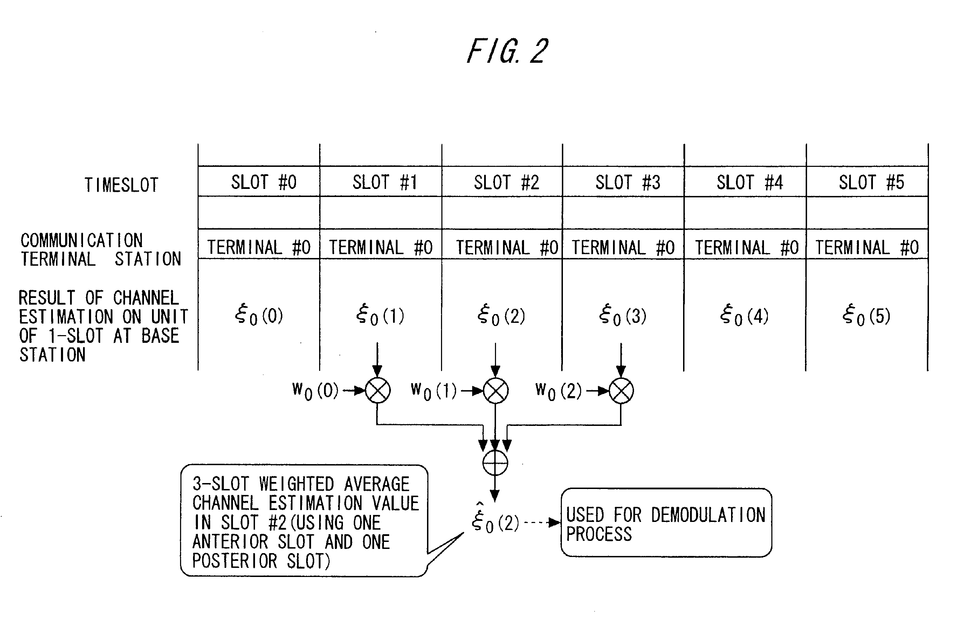

When the communications are consecutively performed between the single terminal station and the base station, in a calculation of the information used for the receiving process, an averaging process of averaging results of calculating the information is properly conducted within a period of time during which the communications continue. FIG. 2 is a diagram showing an example of averaging channel estimation values as the information when performing the consecutive communications. In FIG. 2, the base station calculates a channel estimation value of a transmission path in a wireless zone between the terminal station #0 and the base station in a way that weights the information (the channel estimation value) for 3 slots (a slot #2 and slots anterior and posterior to this slot #2).

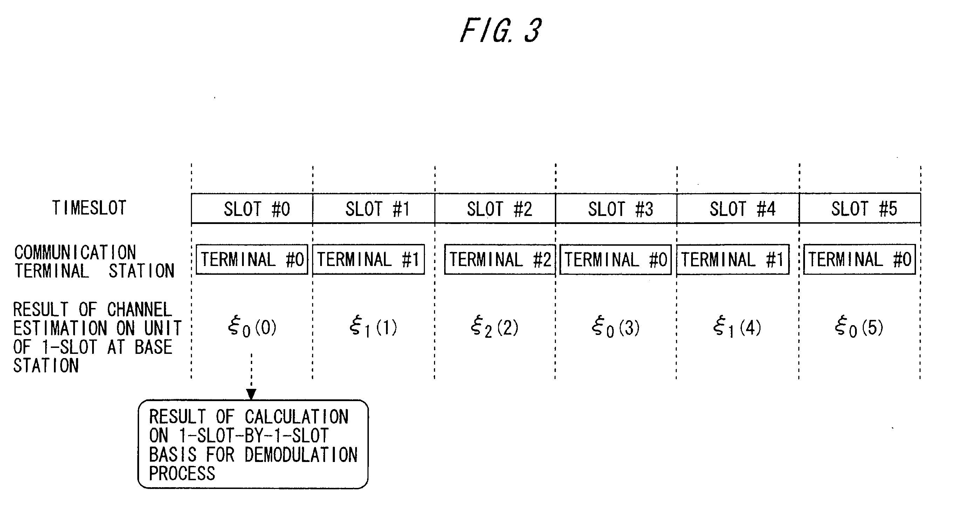

As shown in FIG. 3, however, in a case where a plurality of terminal stations #0, #1, #2 different for every timeslot perform the packet communications by time division, the base station calculates the channel estimation value by using only the receiving signal within one packet. Therefore, an improvement on the quality owing to the averaging effect was not obtained in contrast with the case of performing the consecutive communications.

In the case of performing the packet communications, a modulation processing unit of a receiver (the base station) has hitherto included none of timing information covering a plurality of timeslots of the respective terminal stations. Hence, averaging among the slots could not be conducted by a method effective in the improvement on the quality. In view of this point, a coping method such as increasing a rate of pilot signals contained in one packet was taken in order to exhibit a characteristic of the transmission path in the process within one slot. This type of coping method has, however, a problem that a transmission rate of the user data decreases.

It is one object of the present invention to improve a receiving quality on such an occasion that the base station performing the packet communications executes a receiving process from the terminal station.

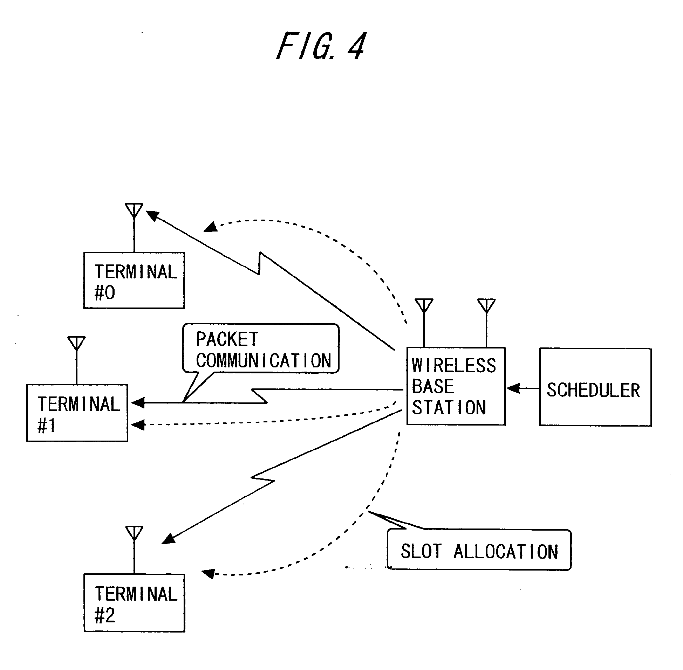

Further, in the communication system depicted in FIG. 1, the base station transmits the packets to the terminal stations #0 - #2 (the downlink communications: FIG. 4). In this case also, the scheduler manages the information on the timeslots employed for the base station to transmit the packets to the respective terminal stations, and notifies the base station and each of the terminal stations of the slot allocation information. The transmitting process and the receiving process of the packets are executed based on the slot allocation information between the base station and the terminal stations.

Also in the packet receiving process in the terminal station, in the case of the consecutive communications, it is possible to conduct averaging in the calculations of various items of information used for the receiving process by the same method as the method shown in FIG. 2. When performing the packet communications using the timeslots by the time division among other terminal stations, the intra 1-packet process is executed in the same way as in FIG. 3. Therefore, as compared with the case of conducting the consecutive communications, the improvement on the quality owing to the averaging effects is not acquired.

One object of the present invention is to improve the receiving quality on such an occasion that the terminal station performing the packet communications execute the receiving process from the base station.

### [First Embodiment]

### <Outline of First Embodiment>

When the base station performs the packet communications with the plurality of terminal stations, generally, the scheduler controls packet transmission timing. The scheduler notifies a reception processing unit of the base station of terminal station allocation information, and the averaging is conducted between the packets received from the same terminal station when calculating the various items of information needed for the packet receiving process.

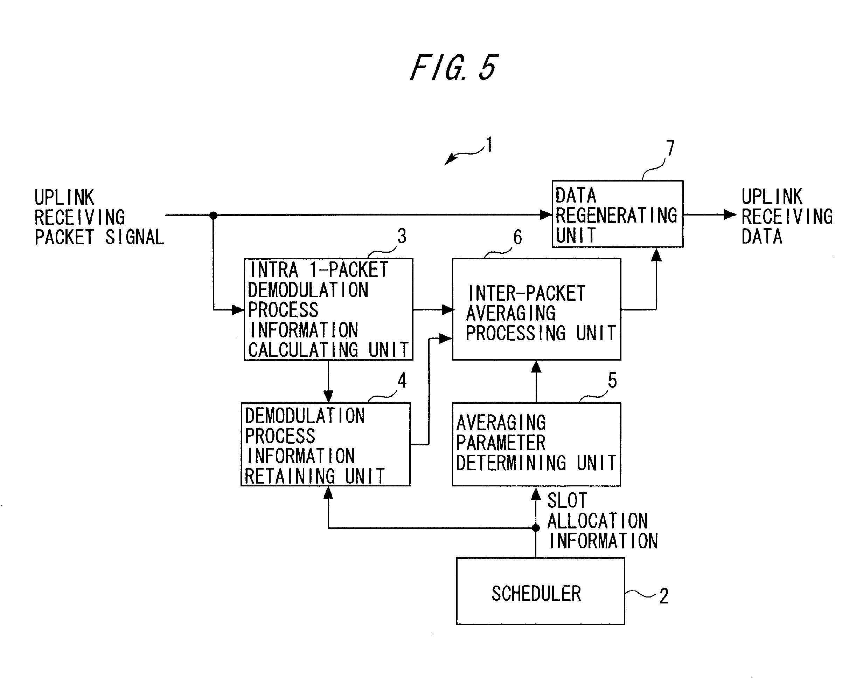

FIG. 5 is an explanatory diagram of the principle of the base station according to the first embodiment. In FIG. 5, a base station 1 includes a scheduler 2, an intra 1-packet demodulating process information calculating unit 3 (which will hereinafter be simply referred to as a [calculating unit 3]), a demodulating process information retaining unit 4 (which will hereinafter be simply referred to as a [retaining unit 4]), an averaging parameter determining unit 5 (which will hereinafter be simply referred to as a [determining unit 5]), an inter-packet averaging processing unit 6 (which will hereinafter be simply termed an [averaging processing unit 6]), and a data regenerating unit 7. The base station 1 is applied to the communication system as illustrated in FIGS. 1 and 4. Unlike FIGS. 1 and 4, however, such a configuration is adopted in FIG. 5 that the base station 1 includes the scheduler 2. As a matter of course, the scheduler 2 can be also constructed as a device independent of the base station 1.

The receiving packet signals (packet) in the uplink communications are inputted to the calculating unit 3 and to the data regenerating unit 7. The calculating unit 3 calculates the information used for the demodulating process within the received 1-packet.

An intra 1-packet calculation result is stored for every communication terminal station in the retaining unit 4. The scheduler 2 notifies the retaining unit 4 and the determining unit 5 of the timeslot allocation information (slot allocation information). The retaining unit 4 retains the slot allocation information in a way that associates the slot allocation information with the intra 1-packet calculation result for ever communication terminal station.

Further, the determining unit 5 determines an averaging parameter (a weighting coefficient) used for averaging the calculation results by use of a packet interval of the same terminal station, which can be deduced from the slot allocation information.

The averaging processing unit 6 obtains the calculation results in the plurality of discontinuous timeslots related to the same terminal station from the retaining unit 4, and executes, after receiving the weighting coefficient corresponding to each timeslot from the determining unit 5 and weighting the calculation result of each timeslot, the averaging process of averaging the calculation results, thereby calculating the demodulating process information used for regenerating the data. The data regenerating unit 7 receives the demodulating process information from the averaging processing unit 6, and demodulates the receiving packet signals by use of the demodulating process information. Thus, the data are regenerated from the receiving packet signals and outputted from the data regenerating unit 7.

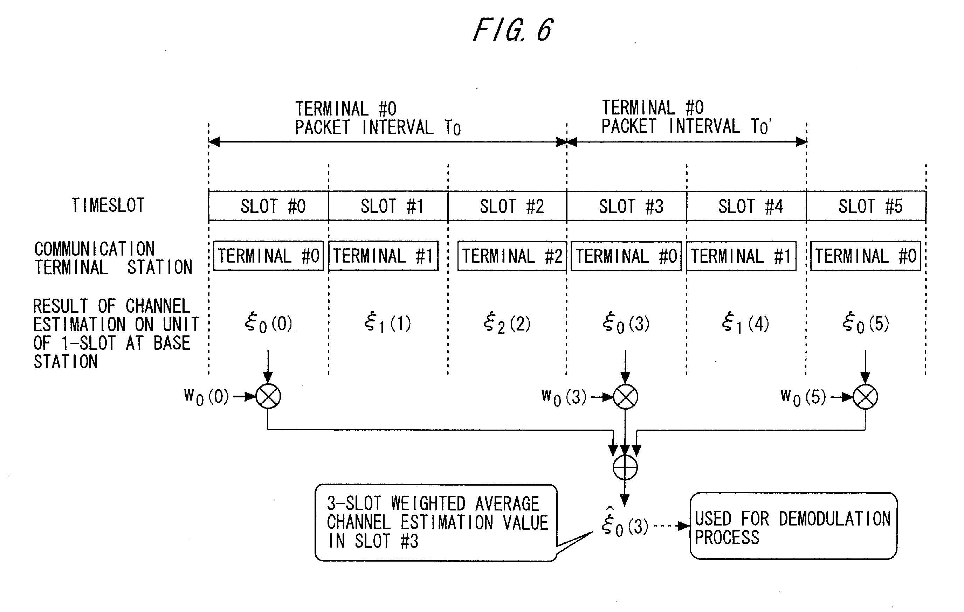

FIG. 6 is a diagram showing a calculation example of a channel estimation value that is actualized by employing the configuration of the base station 1 depicted in FIG. 5. The example shown in FIG. 6 is that discontinuous timeslots (slots) #0, #3 and #5 are allocated to the terminal station #0.

In the packet receiving process of the slot #3, weights w₀(0), w₀(3), w₀(5) (which are determined by the determining unit 5) are applied to the intra 1-packet channel estimation value calculation results (which are calculated by the calculating unit 3 and retained by the retaining unit 4) of the slots #0, #3 and #5, and an averaging channel estimation value of the slot #3 is calculated (by the averaging processing unit 6).

The averaging process is executed with respect to averaging target timeslots contained in an averaging range determined based on a predetermined delay allowable value and an averaging effective slot range determined from a propagation environment etc in the timeslots becoming the channel estimation value calculation target slots (data regeneration timing).

In the example in FIG. 6, for example, the delay allowable value is specified to be [2 slots], and the averaging effective slot range is determined to be [3 slots]. When centering at the timeslot (which is the slot #3 in FIG. 6) serving as the channel estimation value calculation target timeslot, the timeslots belonging to a range of three slots (slots #0, #1, #2) anterior to the slot #3 and two slots (slots #4, #5) posterior thereto, become the averaging target slots. To be specific, in FIG. 6, the averaging range is defined with the slots #0 through #5 belonging to the range of the three slots anterior to the slot #3 and the two slots posterior thereto, and the averaging target slots are the slots #0, #3 and #5 belonging to this range and allocated to the terminal station #0.

In this case, the determining unit 5 determines a maximum weighting coefficient with respect to w₀ (3) as the data regeneration timing. Further, the determining unit 5 determines the weighting coefficients of timings at distances T0, T0' (T0 > T0') from the data regeneration timing with the slot allocation information given from the scheduler 2 so as to establish a relationship such as w₀(0) < w₀(5) in terms of a time difference thereof.

The data regenerating unit 7 executes a demodulating process of the packet of the slot #3 by use of the averaged channel estimation value. This enables acquirement of a more preferable demodulation result (data) than by the demodulating process using only the channel estimation value of the slot #3.

According to the base station 1, in the calculation of the information employed for a base station receiving process (a packet demodulating process) when in the uplink packet communications, the averaging process taking account of the packet interval (the slot interval) is executed on the information of the packets received with the plurality of discontinuous timeslots from the same terminal station. With this scheme, accuracy of the information can be increased, and a quality of the uplink packet communications can be improved.

It should be noted that the base station 1 corresponds to a wireless base station according to the present invention, the calculating unit 3 corresponds to a calculating unit according to the present invention, the retaining unit 4 corresponds to a storage unit according to the present invention, the averaging processing unit 6 corresponds to an averaging processing unit and to a weighting unit according to the present invention, and the determining unit 5 corresponds to a determining unit according to the present invention.

### <First Specific Example>

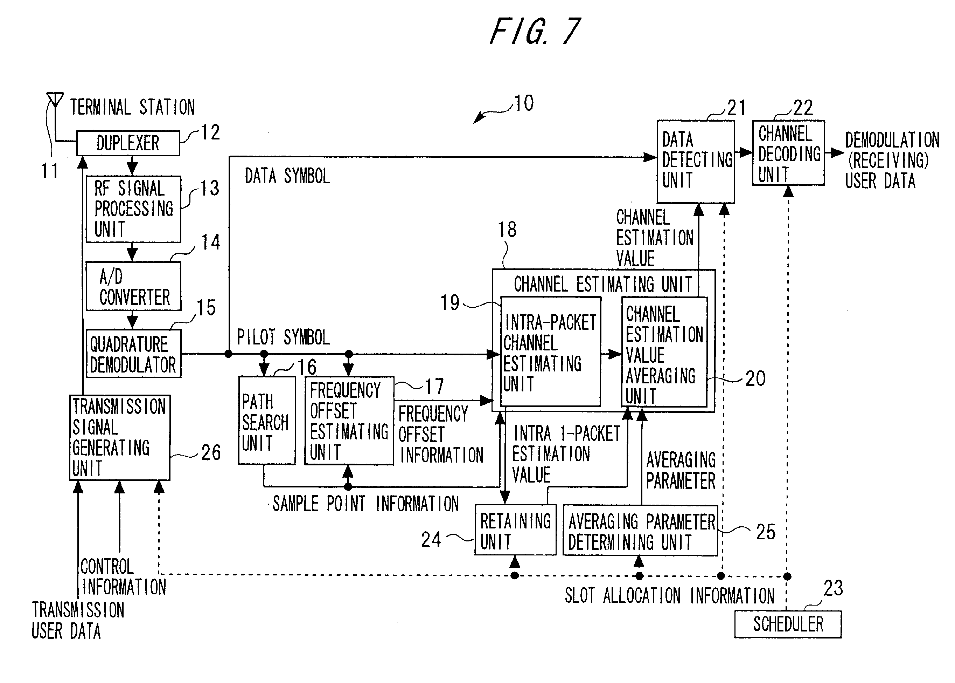

Next, a first specific example of the base station (the base station 1) in the first embodiment will hereinafter be described. FIG. 7 is a diagram showing an example (a base station 10) in which the configuration of the base station 1 is applied to averaging the channel estimation values.

In FIG. 7, the signals from the terminal station, which are received by a transmitting/receiving antenna 11, are separated from transmitting signals by a duplexer 12, then converted into IF (Intermediate Frequency) band signals by an RF (Radio Frequency) signal processing unit 13, further converted into digital signals having a necessary sample rate/bit count by an analog/digital (A/D) converter 14, and quadrature-detected by a quadrature demodulator 15, thereby becoming base band I/Q (In-phase/Quadrature-phase) signals (packet data).

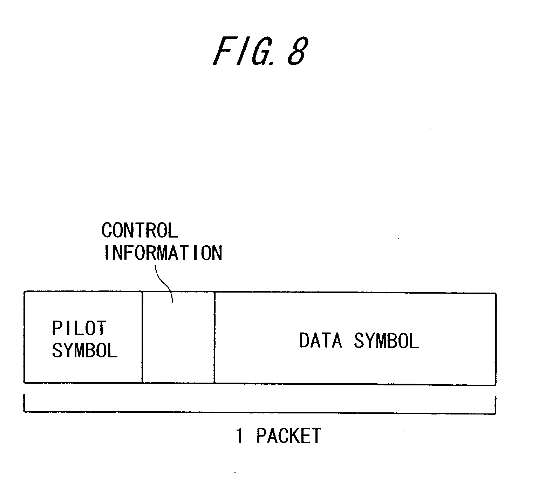

FIG. 8 shows an example of a structure of a packet data format applied to the first embodiment. One packet contains a data symbol transmitted by a user of the terminal station for the purpose of the communications, a pilot symbol (generally consisting of known patterns) used for the purpose of detecting a path, estimating a propagation path, etc, and control information employed for controlling other communications. It is preferable in terms of increasing a transfer rate of the user data to lessen a rate occupying the fields excluding the data symbol in the packet.

Referring back to FIG. 7, a path search unit 16 detects a sample timing (sampling point information) of the receiving packet by detecting the pilot symbol field in the base band I/Q signal. A frequency offset estimating unit 17 makes a comprising of phase between the pilot symbols, thereby estimating carrier frequency offset between the base station and the terminal station.

A channel estimating unit 18 has an intra-packet channel estimating unit 19 (corresponding to the calculating unit 3 in FIG. 5) and a channel estimation value averaging unit 20 (the averaging processing unit in FIG. 5). The intra-packet channel estimating unit 19 estimates a propagation path channel by comparing a phase of the pilot symbol with a known pilot. The channel estimation value averaging unit 20 executes a process of averaging the channel estimation values calculated from the plurality of packets.

A data detecting unit 21 detects the data symbol after compensating the propagation path channel with the channel estimation value given from the channel estimating unit 18 with respect to the signal in the data symbol field in the output (the base band I/Q signal) of the quadrature demodulator 15. A channel decoding unit 22 executes an error correction process etc on the detecting data symbol, and regenerates the receiving data. The data detecting unit 21 and the channel decoding unit 22 correspond to the data regenerating unit 7 in FIG. 5.

Further, the base station 10 includes a scheduler 23 (corresponding to the scheduler 2 in FIG. 5), a retaining unit 24 (corresponding to the retaining unit 4 in FIG. 5) retaining the intra 1-packet channel estimation value calculated by the intra-packet channel estimating unit 19 (corresponding to the calculating unit 3 in FIG. 5) and the slot allocation information given from the scheduler 23 in a way that associates the channel estimation value and the slot allocation information with each other , and an averaging parameter determining unit 25 (corresponding to the determining unit 5 in FIG. 5) that determines the averaging parameter (the weighting coefficient) with respect to the channel estimation value of each slot from a receiving interval of the packet of the same terminal station that is deduced from the slot allocation information. The retaining unit 24, the averaging parameter determining unit 25, the data detecting unit 21 and the channel decoding unit 22 operate while taking synchronization on the basis of the slot allocation information given from the scheduler 23.

Further, the slot allocation information given from the scheduler 23 is inputted together with control information and the transmitting user data to a transmitting signal generating unit 26. The transmitting signal generating unit 26 generates a downlink transmitting signal containing the slot allocation information, the control information and the transmitting user data. The transmitting signal is transmitted via the duplexer 12 toward the terminal station from the transmitting/receiving antenna 11.

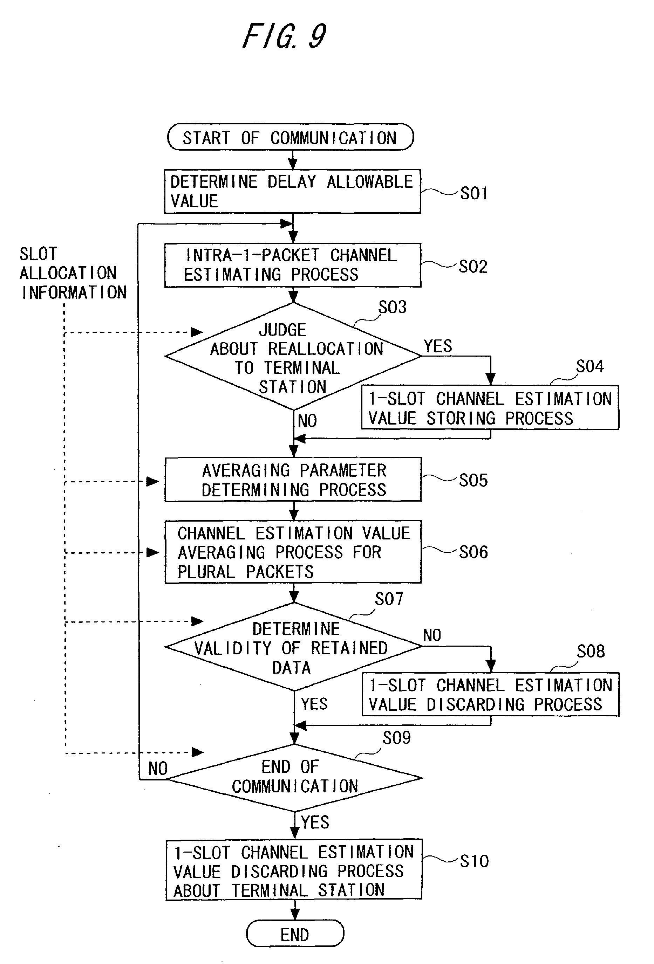

FIG. 9 is a diagram showing a flow of executing the channel estimation value calculating process executed in the base station 10. A start of the process shown in FIG. 9 is triggered by starting the communications between the terminal station and the base station. Further, the process shown in FIG. 9 indicates, in a case where the base station 10 performs the uplink communications with the plurality of terminals (the terminal stations #0, #1 and #2 shown in FIG. 1) including a certain terminal station (which is, e.g., the terminal station #0 shown in FIG. 1), a process related to receiving the packet of the certain terminal station #0.

To begin with, in the base station 10, a delay allowable value restricted by a parameter for the purpose of the communications etc is determined (step S01). The averaging effective slot range is properly determined in consideration of a radio wave propagation environment etc. The averaging parameter determining unit 25 is notified of the delay allowable value and the averaging effective slot range as items of information for specifying the averaging time.

Thereafter, the intra-packet channel estimating unit 19, when the packet transmitted from the terminal station #0 arrives, executes the intra 1-packet channel estimating process (step S02). The intra 1-packet estimation value is given to the inter-packet averaging processing unit 6 and to the retaining unit 24.

Next, the retaining unit 24 refers to the slot allocation information given from the scheduler 23, and thus judges whether the reallocation of the timeslot to the terminal station (the terminal station #0) is scheduled or not (step S03). At this time, if the reallocation is scheduled (S03; Yes), the retaining unit 24 stores the intra 1-packet channel estimation value as the 1-slot channel estimation value in a storage area prepared within the retaining unit 24 (step S04). Whereas if the reallocation is not scheduled (S03; No), the 1-slot channel estimation value is not stored.

Next, the averaging parameter determining unit 25 executes the averaging parameter determining process (step S05). To be specific, the averaging parameter determining unit 25 determines the plurality of timeslots used for averaging and discontinuous with respect to a time base from the past slot allocation time of the terminal station #0 on the basis of the slot allocation information and the data regenerating timing which the scheduler 23 notifies of, and on the basis of the averaging time (the averaging range) based on the delay allowable value and the averaging effective slot range.

Subsequently, the averaging parameter determining unit 25 determines the averaging parameters (the weighting coefficients) about the plurality of timeslots. Namely, the averaging parameter determining unit 25, centering at the timeslot of the data regenerating timing, a weighting coefficient that is heaviest to this centered timeslot, and also determines the weighting coefficients with respect to the remaining timeslots in a way that takes time intervals from the centered timeslot into consideration. For example, the averaging parameter determining unit 25 determines the weighting coefficient to be smaller as the time interval from the centered timeslot gets longer.

At this time, the averaging parameter determining unit 25 can properly change (adjust) the determined averaging parameter on the basis of a moving speed of the terminal station #0, a parameter such as an estimated maximum Doppler frequency or the radio wave propagation environment in a deploying position of the base station 10.

Next, the channel estimation value averaging unit 20 executes a process of averaging the channel estimation values about the plurality of packets (step S06). Namely, the channel estimation value averaging unit 20 acquires the averaging parameter (the weighting coefficient) and the slot time corresponding to each of the weighting coefficients from the averaging parameter determining unit 25. Subsequently, the channel estimation value averaging unit 20 acquires the plurality of 1-slot channel estimation values each corresponding to each slot time from the retaining unit 24 and from the intra-packet channel estimating unit 19.

Subsequently, the channel estimation value averaging unit 20 weights the 1-slot channel estimation value by multiplying each 1-slot channel estimation value by the weighting coefficient, and thereafter calculates an average value of these 1-slot channel estimation values. The average value is given as a channel estimation value to the data detecting unit 21. Thereafter, the data symbol detection using the channel estimation value is conducted by the data determining unit 5, and the receiving data are regenerated by the channel decoding unit 22.

On the other hand, the retaining unit 24 judges whether the retained data are valid or not (step S07). It is judged whether or not the retaining unit 24 retains the 1-slot channel estimation value of the timeslot older than the oldest timeslot used for the determination of the averaging parameter, which is made in step S05. Such a 1-slot channel estimation value is not employed for determining the averaging parameter afterwards, and hence the retaining unit 24, if there is this kind of 1-slot channel estimation value, judges this 1-slot channel estimation value as invalid data (S07 ; No). In this case, the retaining unit 24 discards the 1-slot channel estimation value judged invalid (step S08).

Moreover, in step S07, the retaining unit 24 judges, based on the slot allocation information, that the 1-slot channel estimation value not scheduled to be used because of making the reallocation within the averaging time (determined from the delay allowable value and the averaging effective slot range) is also a discard target (invalid data). If there is no invalid data, the processing proceeds to step S09.

It is judged in step S09 whether the communication with the terminal #0 is terminated or not. If the communication is not terminated (S09; No), the processing returns to step S02. Whereas if the communication is terminated (S09; Yes), the retaining unit 24 discards all the 1-slot channel estimation values stored with respect to the terminal station (which is herein the terminal #0) with the communication terminated (step S10). The packet receiving process about the terminal #0 is finished.

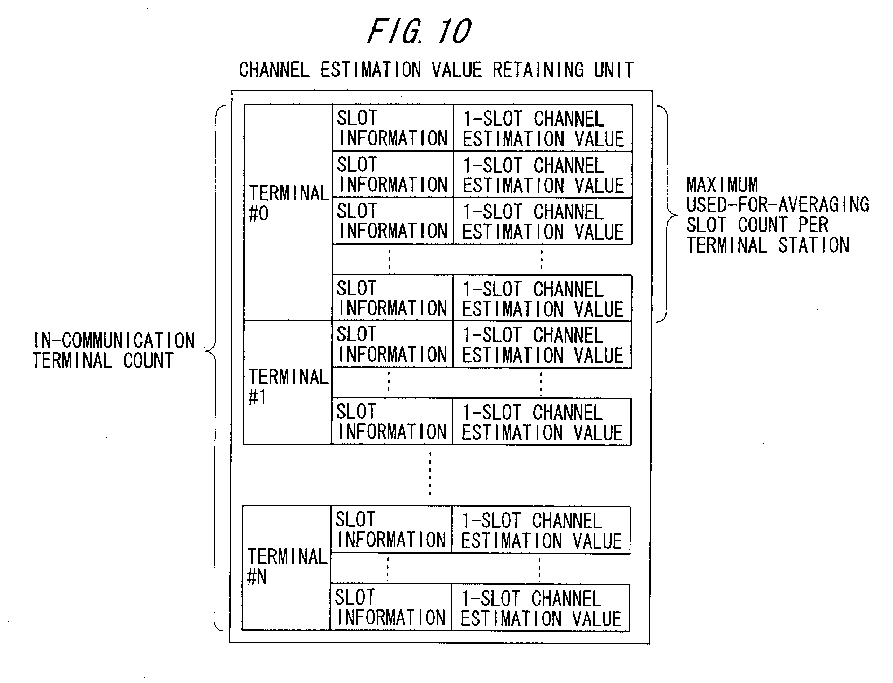

FIG. 10 is a diagram showing an example of a configuration of the channel estimation value retaining unit (the retaining unit 24). FIG. 10 shows an example of a data structure of the data stored in the storage area held by the retaining unit 24. The storage area of the retaining unit 24 has fields ensured for storing (entries of) one or more 1-slot channel estimation values for every in-communication (active communication status) terminal (#0 - #N).

Each of the fields is stored with the entry of the 1-slot channel estimation value (the intra 1-packet channel estimation value). A maximum entry count can be specified in a way that sets, e.g. , a maximum value of the timeslot count used for averaging the channel estimation values as an upper limit value. Alternatively, the maximum entry count can be set variable (parameterized) corresponding to a time range applied to averaging.

Each entry is stored with, in an associative relationship, the 1-slot channel estimation value and time information (the slot information: deduced from the slot allocation information) when this estimation value is calculated. In the 1-slot channel estimation values stored in the respective fields, an estimation value of the range judged to be used for averaging by the averaging parameter determining unit 25 is read out in a plural packet averaging process (FIG. 9: S06).

According to the first specific example, the channel estimation value employed in the data detecting unit 21 involves using the average value of the channel estimation values in the plurality of timeslots, and therefore the data detection can be executed more properly than in the case of employing the channel estimation value based on one times lot. This scheme makes it possible to execute the packet demodulating process with high accuracy and to improve the quality of the uplink communications.

### <Second Specific Example>

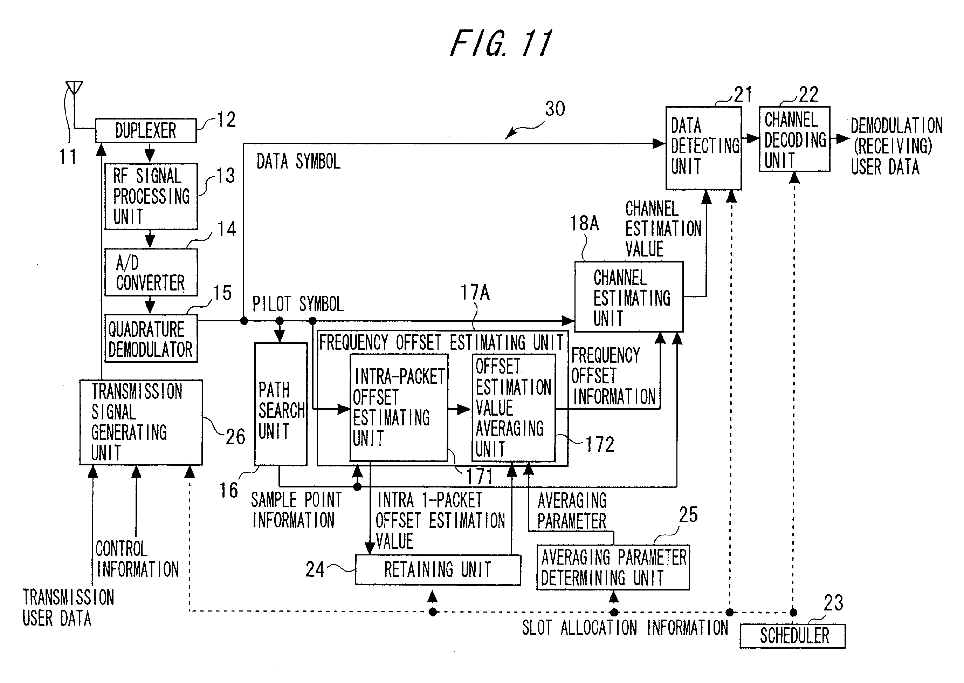

Next, a second specific example of the base station (thebase station 1) in the first embodiment will be explained. FIG. 11 is a diagram showing an example (a base station 30) in which the configuration of the base station 1 is applied to averaging frequency offset estimation values between the terminal stations and the base station. The base station 30 has the same configuration as the base station 10 has, and hence the explanations of the same components are omitted by marking these components with the same reference numerals and symbols. A configuration of the base station 30 will be described in a comparison with the base station 10.

The second specific example is that a retaining unit 24A is stored with the intra 1-packet frequency offset estimation value, and pieces of offset information (offset estimation values) obtained from the plurality of packets are averaged by weighting. In FIG. 11, the base station 30 has a frequency offset estimating unit 17A as a substitute for the frequency offset estimating unit 17. The frequency offset estimating unit 17A includes an intra-packet offset estimating unit 171 (corresponding to the calculating unit 3 in FIG. 5) and an offset estimation value averaging unit 172 (corresponding to the averaging processing unit 6 in FIG. 6).

The intra-packet offset estimating unit 171 has the same function as the frequency offset estimating unit 17 has, and estimates the carrier frequency offset between the base station and the terminal station by making the comparison of phase between the pilot symbols for every packet.

An estimation result is retained as the intra 1-packet offset estimation value (the 1-slot offset estimation value) in the retaining unit 24A. A configuration of the retaining unit 24A is the same as that of the retaining unit 24 except a point that the 1-slot offset estimation value is stored in place of the 1-slot channel estimation value. A configuration of the averaging parameter determining unit 25 is the same as in the first specific example.

The offset estimation value averaging unit 172 obtains a plurality of discontinuous 1-slot offset estimation values belonging to the averaging range from the retaining unit 24A and from the intra-packet offset estimating unit 171, then calculates an average value of the 1-slot offset estimation values after weighting the 1-slot offset estimation value with the averaging parameter (the weighting coefficient) obtained from the averaging parameter determining unit 25, and transfers the calculated average value as the frequency offset information (the frequency offset estimation value) to the channel estimating unit 18A.

The channel estimating unit 18A, which has the same function as that of the intra-packet channel estimating unit 19 of the base station 10, estimates the propagation path channel by comparing a phase of the pilot symbol with the known pilot, and gives a result of the estimation as a channel estimation value to the data detecting unit 21. Except the point described above, the configuration of the base station 30 according to the second specific example is the same as that of the base station 10. Further, in the base station 30, the averaging of the frequency offset estimation values and the entry management by the retainingunit 24Aare conducted in the same processes as those in the processing flow shown in FIG. 9.

According to the second specific example, the average value of the offset estimation values in the plurality of timeslots is used as the frequency offset estimation value used in the channel estimating unit 18A, and hence, the channel estimation can be executed more properly than in the case of employing the offset estimation value based on one timeslot. This scheme enables the packet receiving quality to be improved.

### <Third Specific Example>

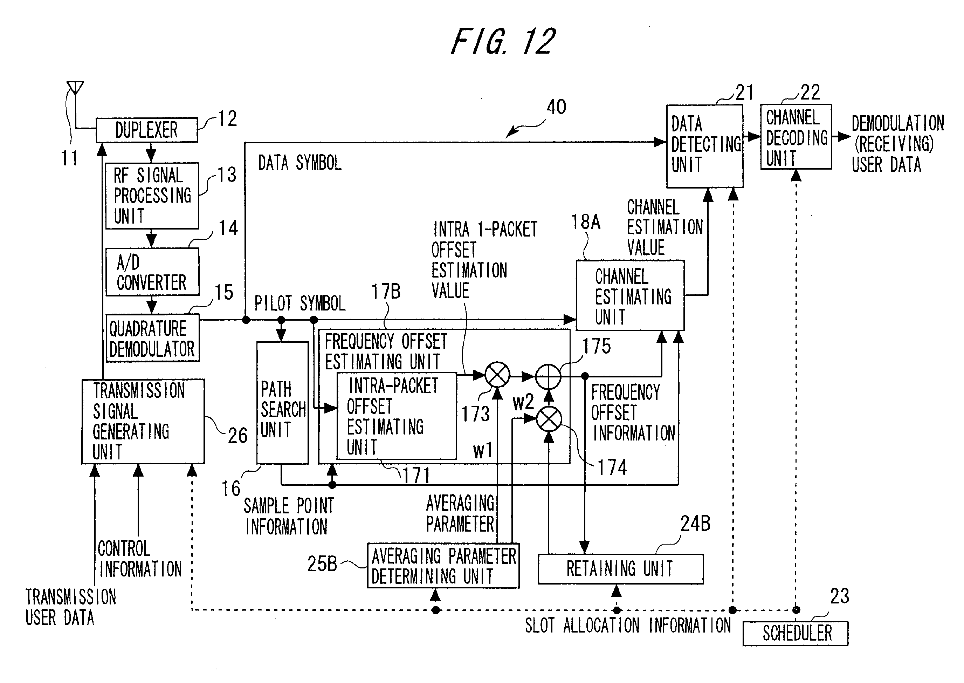

Next, a third specific example of the base station (the base station 1) in the first embodiment will be described. FIG. 12 is a diagram showing an example (a base station 40) in which the configuration of the base station 1 is applied to averaging the frequency offset estimation values between the terminal stations and the base station. The base station 40 has the same configuration as the base station 30 has, and hence the explanations of the same components are omitted by marking these components with the same reference numerals and symbols. A configuration of the base station 40 will be described in a comparison with the base station 30.

Generally, a fluctuation of the frequency offset is in many cases slower than a channel fluctuation caused by fading, wherein factors thereof are a frequency difference between local frequency transmitters of the base station and of the terminal station and an average Doppler frequency shift due to the movement of the terminal station. Hence, there is a case where it is effective to apply a comparatively long time range in order to average the offset estimations.

In the third specific example, the results of the intra-packet offset estimations (the intra 1-packet offset estimation values: the 1-slot offset estimation values) are averaged by use of an exponential average. Therefore, the base station 40 according to the third specific example has the following configuration.

The base station 40 has a frequency offset estimating unit 17B as a substitute for the frequency offset estimating unit 17A (FIG. 11). The frequency offset estimating unit 17B includes the intra-packet offset estimating unit 171 (corresponding to the calculating unit 3 in FIG. 5), a multiplier 173, a multiplier 174 and a combiner (averaging unit) 175 (these components correspond to the averaging processing unit 6 in FIG. 5). Further, the base station 40 has a retaining unit 24B that replaces the retaining unit 24A (FIG. 11) and an averaging parameter determining unit 25B that replaces the averaging parameter determining unit 25 (FIG. 11).

The retaining unit 24B retains, for every in-communication terminal station, the frequency offset information outputted from the frequency offset estimating unit 17B, i.e., the offset estimation value averaged by the exponential average.

The averaging parameter determining unit 25B determines a first weighting coefficient W1 which the 1-slot offset estimation value outputted from the intra-packet offset estimating unit 171 should be multiplied by and a second weighting coefficient W2 which the averaging offset estimation value retained in the retaining unit 24B should be multiplied by so as to establish a relationship such as W1 < W2. As described above, it is quite rare for the offset estimation value to abruptly change, and therefore a larger weighting coefficient than the 1-slot offset estimation value is given to the average value (the averaging offset estimation value) of the offset estimation values obtained so far.

Further, the averaging parameter determining unit 25B determines, based on the slot interval (the time interval) deduced from the slot allocation information, a value of the weighting coefficient W1 so that the weighting coefficient W1 getting larger as the time interval becomes shorter is given to the 1-slot offset estimation value. The accuracy of the offset estimation value can be thereby increased.

The multiplier 173 weights the 1-slot offset estimation value in a way that multiplies this offset estimation value by the weighting coefficient W1, and inputs a result of the multiplication to the combiner 175. The multiplier 174 weights the averaging offset estimation value retained in the retaining unit 24B in a way that multipliesthisoffset estimation value by the weighting coefficient W2, and inputs a result of the multiplication to the combiner 175. The combiner 175 outputs, as frequency offset information, an averaged value obtained by adding up the multiplication results given from the multipliers 173 and 174.

### <Fourth Specific Example>

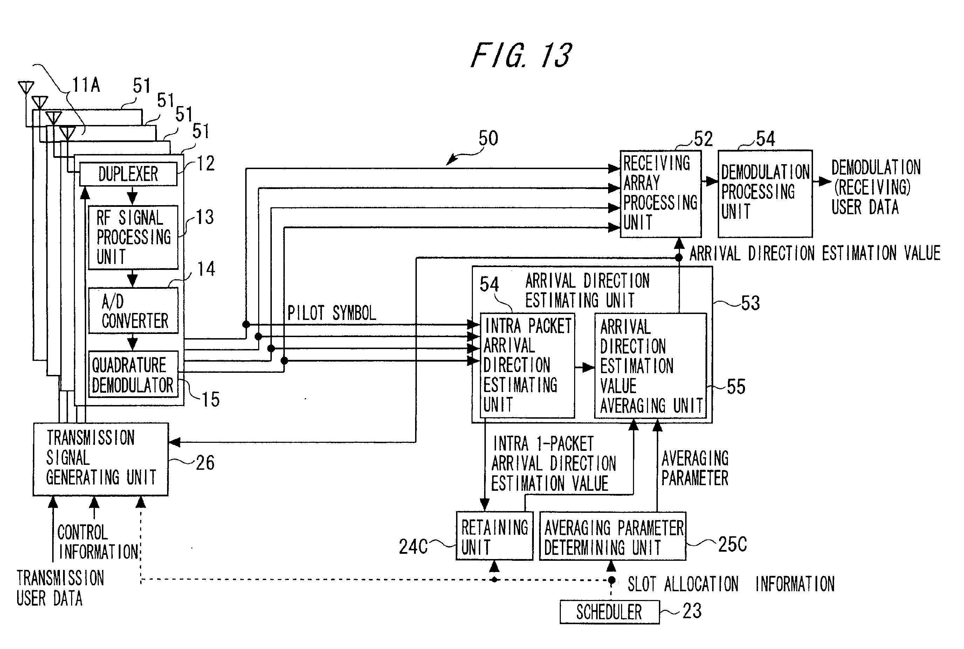

Next, a fourth specific example of the base station (the base station 1) in the first embodiment will be explained. FIG. 13 is a diagram showing an example (a base station 50) in which the configuration of the base station 1 is applied to averaging arrival direction estimation values of the packet receiving signals from the terminal stations. Thebase station 50 has the same configuration as the base station 10 has, and hence the explanations of the same components are omitted by marking these components with the same reference numerals and symbols.

In FIG. 13, the base station 50 has a transmitting/receiving array antenna 11A constructed of a plurality of antennas (four pieces of antennas in FIG. 13). The base station 50 has a demodulating unit 51 prepared for every antenna, and the demodulating unit 51 includes the duplexer 12, the RF signal processing unit 13, the A/D converter 14 and the quadrature demodulator 15, which are explained in the first specific example.

An output (the base band I/Q signal: the packet) from each demodulating unit 51 is inputted to a receiving array processing unit 52 and to an arrival direction estimating unit 53. The receiving array processing unit 52 executes, based on the arrival direction estimation value outputted from the arrival direction estimating unit 53, an array combining process with respect to the signal sent from each of the demodulating units 51, and inputs the post-combining signal to a demodulation processing unit 54. The demodulation processing unit 54 demodulates the post-combining signal and outputs demodulation (receiving) user data.

The arrival direction estimating unit 53 includes an intra-packet arrival direction estimating unit 54 (corresponding to the calculating unit 3 in FIG. 5) and an arrival direction estimation value averaging unit 55 (corresponding to the averaging processing unit 6 in FIG. 5). The intra-packet arrival direction estimating unit 54 calculates an arrival direction estimation value from the pilot symbol in the packet and stores this estimation value as a 1-slot arrival direction estimation value in the retaining unit 24C.

The retaining unit 24C stores the 1-slot arrival direction estimation value per terminal station. A data structure in a storage area of the retaining unit 24C is the same as the structure depicted in FIG. 10 except such a point that the 1-slot arrival direction estimation value is stored in place of the 1-slot channel estimation value. The averaging parameter determining unit 25C has the same function as the averaging parameter determining unit 25 shown in FIG. 7 has.

The arrival direction estimation value averaging unit 55 receives the weighting coefficients corresponding to the plurality of timeslots belonging to the averaging range from the averaging parameter determining unit 25C, and acquires the plurality of 1-slot arrival direction estimation values associated therewith from the retaining unit 24C and from the intra-packet arrival direction estimating unit 54. Subsequently, the arrival direction estimation value averaging unit 55 weights and averages the 1-slot arrival direction estimation values, and gives the averaged arrival direction estimation value to the receiving array processing unit 52.

According to the base station 50, the arrival direction is estimated more precisely (the arrival direction estimation accuracy is improved), whereby the receiving quality can be improved.

### [Second Embodiment]

Next, a second embodiment of the present invention will be described. Given in the second embodiment is a discussion on improving the packet receiving quality in the terminal station when in the downlink communications. The second embodiment includes the common points to the first embodiment and will illustrate mainly a different point while omitting the explanations of the common points.

### <Outline of Second Embodiment>

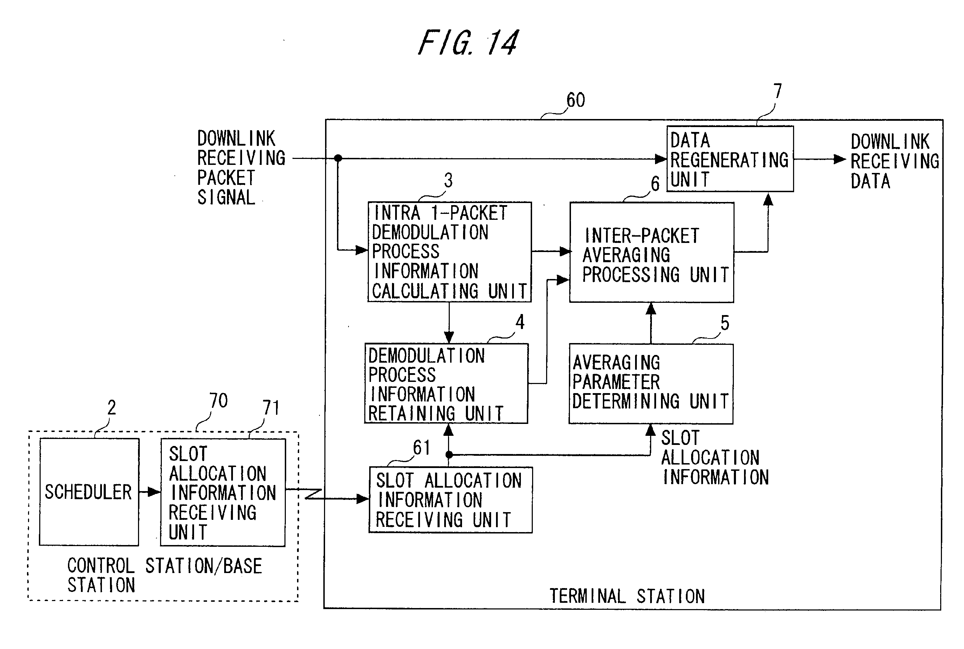

FIG. 14 is a diagram showing the principle of the terminal station (a terminal station 60) in the second embodiment. In FIG. 14, a control station or a base station 70 has the scheduler 2 and a slot allocation information transmitting unit 71 for transmitting the slot allocation information given from the scheduler 2 to the terminal station 60 via the wireless zone.

The terminal station 60 has a slot allocation information receiving unit 61 for receiving the slot allocation information from the control station or the base station 70. Further, the terminal station 60 includes the calculating unit 3, the retaining unit 4, the determining unit 5, the averaging processing unit 6 and the data regenerating unit 7 as those shown in FIG. 5. Downlink receiving packet signals, which replace the uplink receiving packet signals, are inputted to the calculating unit 3 and to the data regenerating unit 7, and the data regenerating unit 7 outputs the downlink receiving data.

In the second embodiment, the notification target terminal station 60 (in the active communication status) is notified of the slot allocation information given from the scheduler 2 by use of the slot allocation information transmitting unit 71 serving as an allocation information notifying means. The terminal station 60 averages various items of information among the packets forwarded to the target terminal station when calculating the various items of information required for the receiving process (the packet demodulating process).

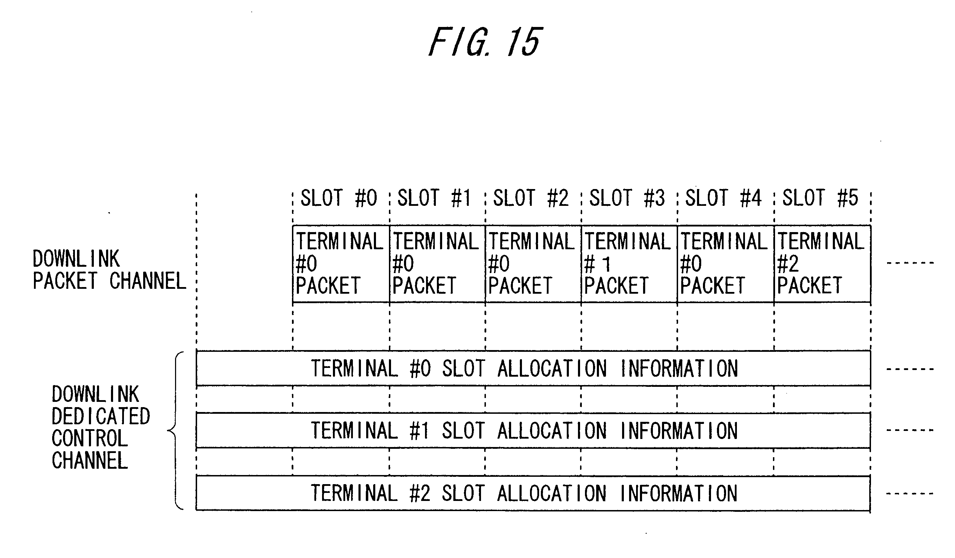

FIG. 15 is a diagram showing an example of a structure of a downlink channel used when the control station or the base station 70 notifies the terminal station 60 of the slot allocation information given from the scheduler 2. In the example shown in FIG. 15, a dedicated control channel for notifying of the slot allocation information is used for every terminal station performing the downlink packet communications. This dedicated control channel can be used in common for the purpose of transmitting the control information other than the slot allocation information. The slot allocation information to be transmitted contains pieces of information on not only one slot to be used afterwards but also a plurality of slots corresponding to the terminal station 60, which will be used in the future.

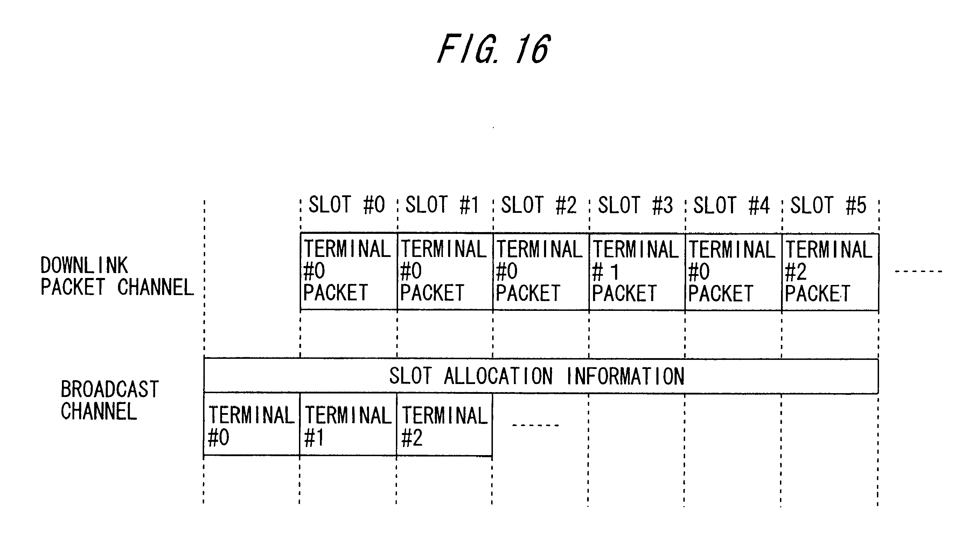

FIG. 16 shows another example of the structure of the downlink channel used when the control station or the base station 70 shown in FIG. 14 notifies the terminal station 60 of the slot allocation information given from the scheduler 2. In the example shown in FIG. 16, a broadcast channel common to the plurality of terminal stations 60 performing the downlink packet communications is employed for notifying of the slot allocation information. The slot allocation information may also be transmitted by time division multiplexing (TDM) for every terminal station 60. Alternatively, a method such as code division multiplexing (CDM) in a predetermined format may also be applied. Further, this broadcast channel can be used in common for the purpose of transmitting the control information other than the slot allocation information.

According to the terminal station 60, in the calculation of the information employed for the terminal station receiving process when in the downlink packet communications, the information of the packets received with the plurality of discontinuous timeslots undergoes the averaging process after being weighted in a way that takes account of the packet interval (the slot interval), whereby the highly accurate information can be acquired. It is therefore possible to improve the quality of the downlink packet communications

It should be noted that the terminal station 60 corresponds to a wireless terminal according to the present invention, the calculating unit 3 corresponds to a calculating unit according to the present invention, the retaining unit 4 corresponds to a storage unit according to the present invention, the averaging processing unit 6 corresponds to an averaging processing unit and to a weighting unit according to the present invention, and the determining unit 5 corresponds to a determining unit according to the present invention.

### <First Specific Example>

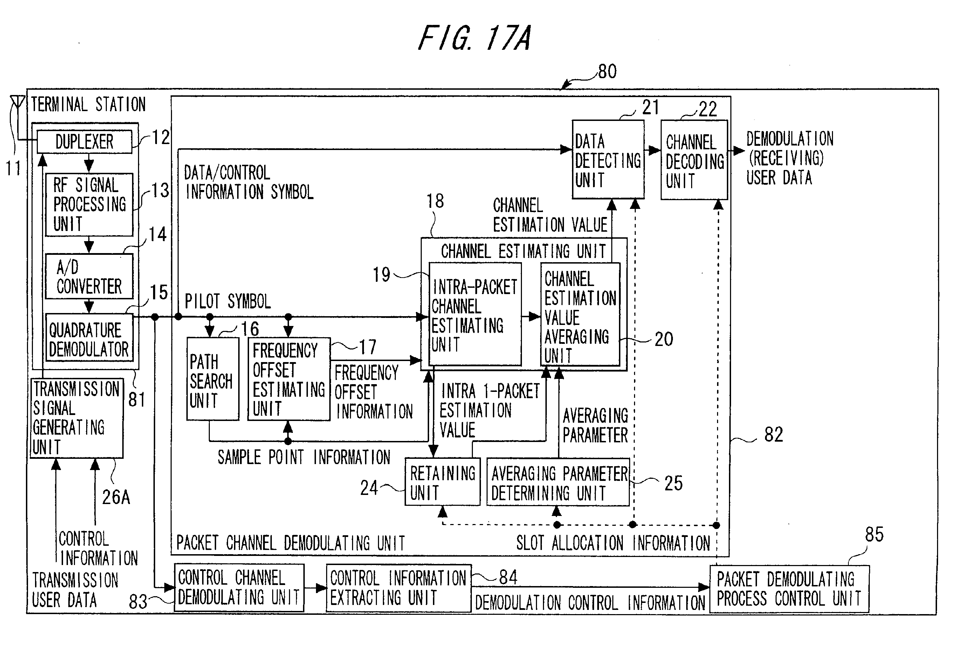

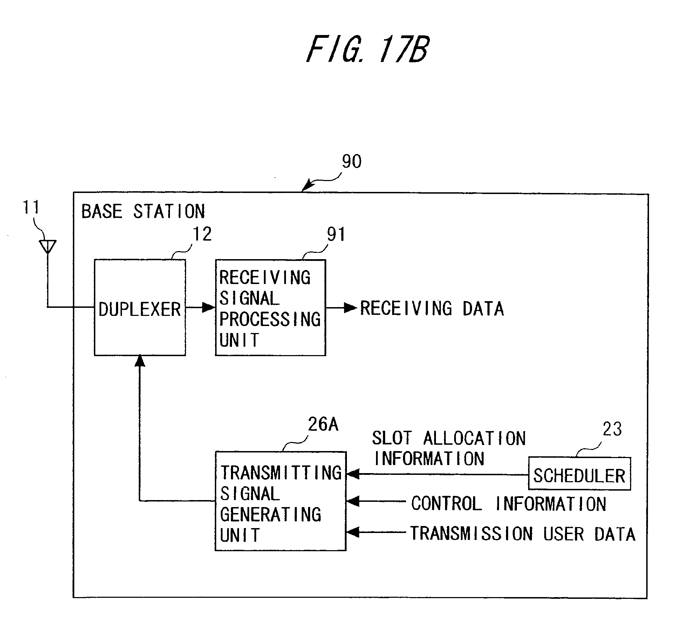

Next, a case of executing the process of averaging the channel estimation values in the terminal station will be explained as a first specific example of the control station or the base station 70 and the terminal station 60 in the second embodiment. FIG. 17A is a diagram showing an example of a configuration of the terminal station (a terminal station 80) corresponding to the first specific example 1 of the terminal station 60, and FIG. 17B is a diagram showing an example of a configuration of the terminal station (a terminal station 90) corresponding to the first specific example 1 of the control station or the terminal station 70.

In FIG. 17B, the base station 90 includes the transmitting/receiving antenna 11, the duplexer 12, a receiving signal processing unit 91 that executes a process of demodulating the receiving signal outputted from the duplexer 12 and outputs the receiving data, a scheduler 23, and a transmitting signal processing unit 26A. The transmitting signal processing unit 26A, the duplexer 12 and the transmitting/receiving antenna 11 correspond to the slot allocation information transmitting unit 71 shown in FIG. 14.

The slot allocation information given from the scheduler 23 is transmitted from the transmitting/receiving antenna 11 via the transmitting signal processing unit 26A and via the duplexer 12. The transmitting signal processing unit 26A transmits the slot allocation information according to the downlink format. The base station 90 notifies the terminal station 80 of the slot allocation information together with the control information by employing the control channel (the dedicated control channel (FIG. 15) or the broadcast channel (FIG. 16)) different from the packet channel for the transmitting user data.

In FIG. 17A, the terminal station 80 has the transmitting/receiving antenna 11, a demodulating unit 81 and a packet channel demodulating unit 82. Configurations of the demodulating unit 81 and of the packet channel demodulating unit 82 are the same as those in the base station 10 illustrated in FIG. 7, and hence their explanations are omitted.

In the first specific example, however, the terminal station 80 is notified of the slot allocation information through the control channel. Therefore, the terminal station 80 includes a control channel demodulating unit 83 for executing the demodulating process about the control channel from the output of the demodulating unit 81, a control information extracting unit 84 for extracting demodulation control information (containing the slot allocation information) from a result of the demodulation about the control channel, and a packet demodulating process control unit 85 for controlling the packet channel demodulating process such as notifying the data detecting unit 21, the channel decoding unit 22, the retaining unit 24 and the averaging parameter determining unit 25 of the slot allocation information in the demodulation control information. The transmitting/receiving antenna 11, the demodulating unit 81, the control channel demodulating unit 83, the control information extracting unit 84 and the packet demodulating process control unit 85 correspond to the slot allocation information receiving unit 61 shown in FIG. 14.

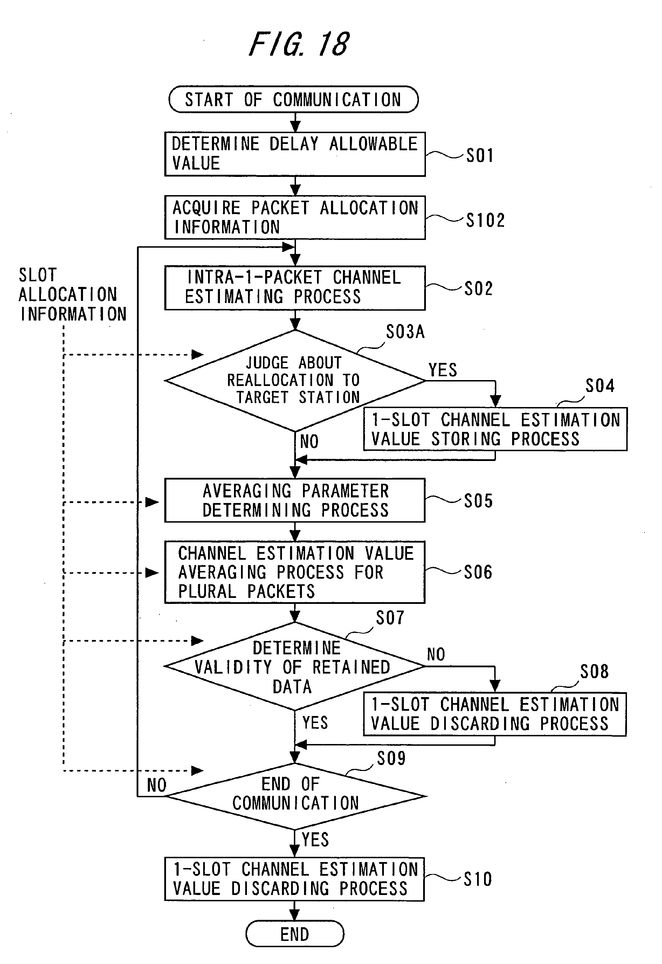

FIG. 18 is a flowchart showing an execution flow of a channel estimation value calculating process executed by the terminal station 80 shown in FIG. 17A. The process shown in FIG. 18 is the same as the process in the base station 10 illustrated in FIG. 9 except the following point.

(1) In step S102, the packet allocation information (the slot allocation information) is acquired from the control channel, and the data detecting unit 21, the channel decoding unit 22, the retaining unit 24 and the averaging parameter determining unit 25 are notified of the packet allocation information.

(2) In step S03A, the retaining unit 24 refers to the slot allocation information given from the packet channel demodulating process control unit 85, and thus judges whether or not the reallocation of the timeslot to the target station is scheduled from now onwards.

A flow of the process shown in FIG. 18 is given as follows. When starting the packet channel reception, a delay allowable value restricted by the parameter for the purpose of the communications etc is determined (step S01). Next, the slot allocation information transmitted from the base station 90 and given from the scheduler 23 is acquired through the control channel demodulating unit 83 and the control information extracting unit 84 (step S102).

Thereafter, the reception of the packet from the downlink is started. When the packet arrives, an intra 1-packet channel estimatingprocess is executed (step S02). Next, if the reallocation of the timeslot to the target terminal station, which involves using the acquired slot allocation information, is scheduled from now onwards (S03A; Yes), the intra 1-slot channel estimation value is stored in the retaining unit 24 (step S04).

Next, an averaging parameter for the channel estimation values calculated with the plurality of discontinuous timeslots is determined from the past slot allocation time of the target terminal station (step S05). The averaging parameter gets further properly changeable with parameters of a moving speed of the target terminal station and an estimation maximum Doppler frequency, etc.

Averaging is conducted among the channel estimation values calculated with the plurality of timeslots by use of the determined averaging parameter (step S06). In the retained 1-slot channel estimation values, the 1-slot channel estimation value older than the oldest 1-slot channel estimation value determined to be used by the averaging parameter determining unit 25 becomes unnecessary and is therefore discarded (step S07, step S08). Thereafter, a loop of step S02 - step S08 is repeated till the communications with the base station 90 are finished (step S09), and, when the communications are finished, the plurality of 1-slot channel estimation values stored in the retaining unit 24 is discarded (step S10).

### <Second Specific Example>

Next, a second specific example of the control channel or the base station and the terminal station in the second embodiment will be described. The second specific example has the common points to the first specific example (FIGS. 17A, 17B and 18) described above, and hence mainly a different point will be explained while omitting the explanations of the common points.

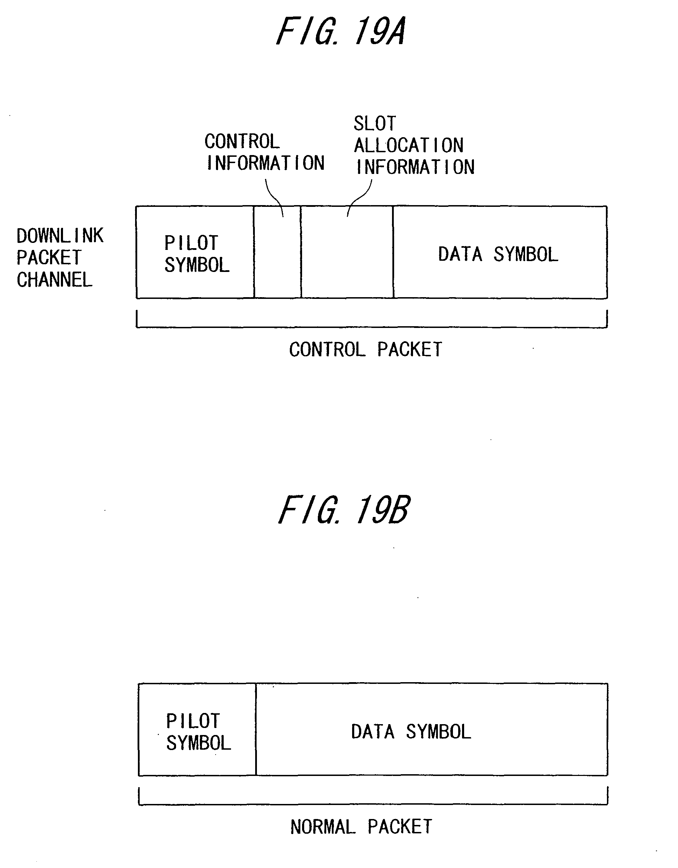

The second specific example is different from the first specific example in terms of the downlink channel used when notifying the terminal station of the slot allocation information given from the scheduler. FIG. 19A is an explanatory diagram showing a format of the control packet applied to the second specific example, and FIG. 19B is an explanatory diagram showing a format of the normal packet applied to the second specific example.

In the second specific example, as illustrated in FIG. 19A, the control information and the slot allocation information of the receiving terminal station are embedded in a specified packet (control packet) of the downlink packet channel. This slot allocation information contains allocation information of the terminal stations in the plurality of subsequent timeslots.

Further, notification of the control information and the slot allocation information is made at a certain timeslot, and, if not required to embed the control information and the slot allocation information at a subsequent timeslot, the packet format is switched over, whereby the normal packet containing the pilot symbol and the data symbol as shown in FIG. 19B is transmitted.

The transmission/reception timing of the control packet can be specified as below.
<1> To synchronize with specified reference time (asynchronous channel etc).
<2> A head packet when starting the communications is set as the control packet, and the subsequent control packet transmission timing is contained in the control information.

If the method described above is employed, the terminal station can recognize the control packet and the normal packet by distinguishing therebetween.

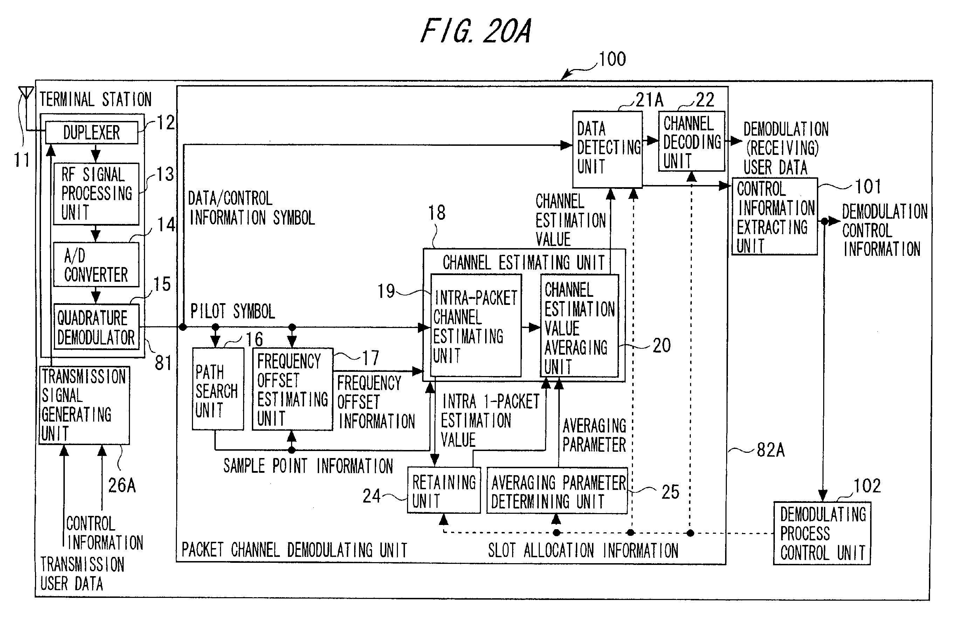

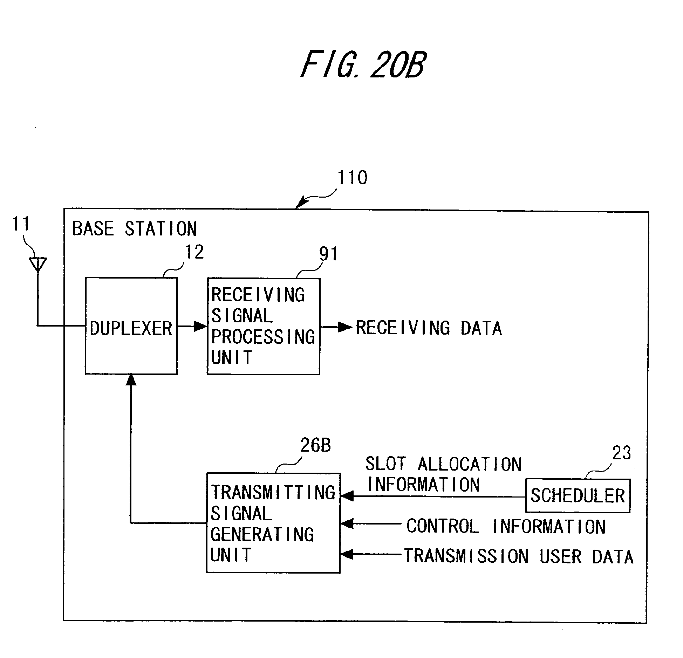

FIG. 20A is a diagram showing an example of a configuration of the terminal station (a terminal station 100) corresponding to the second specific example of the terminal station 60, and FIG. 20B is a diagram showing an example of a configuration of the terminal station (a terminal station 110) corresponding to the second specific example of the control station or the terminal station 70. FIGS. 20A and 20B disclose a configuration for averaging the channel estimation values in the terminal station 100. The terminal station 100 and the base station 110 have the same configurations as those of the terminal station 80 (FIG. 17A) and of the base station 90 (FIG. 19B), and hence the same components are marked with the same reference numerals and symbols in a way that omits their explanations.

The base station 110 shown in FIG. 20B transmits the slot allocation information given from the scheduler 23 in such a way that a transmitting signal generating unit 26B embeds the slot allocation information in the control packet (FIG. 19A) of the downlink packet channel.

A packet channel demodulation processing unit 82A of the terminal station 100 shown in FIG. 20A includes a data detecting unit 21A for detecting a data/control information symbol from the packet (the base band I/Q signal). The terminal station 100 further includes a control information extracting unit 101 for extracting the control information and the slot allocation information from the data/control information symbol, and a demodulating process control unit 102 for controlling the packet demodulating process such as notifying the data detecting unit 21A, the channel decoding unit 22, the retaining unit 24 and the averaging parameter determining unit 25 of the slot allocation information. The slot allocation information is properly updated when receiving the control packet.

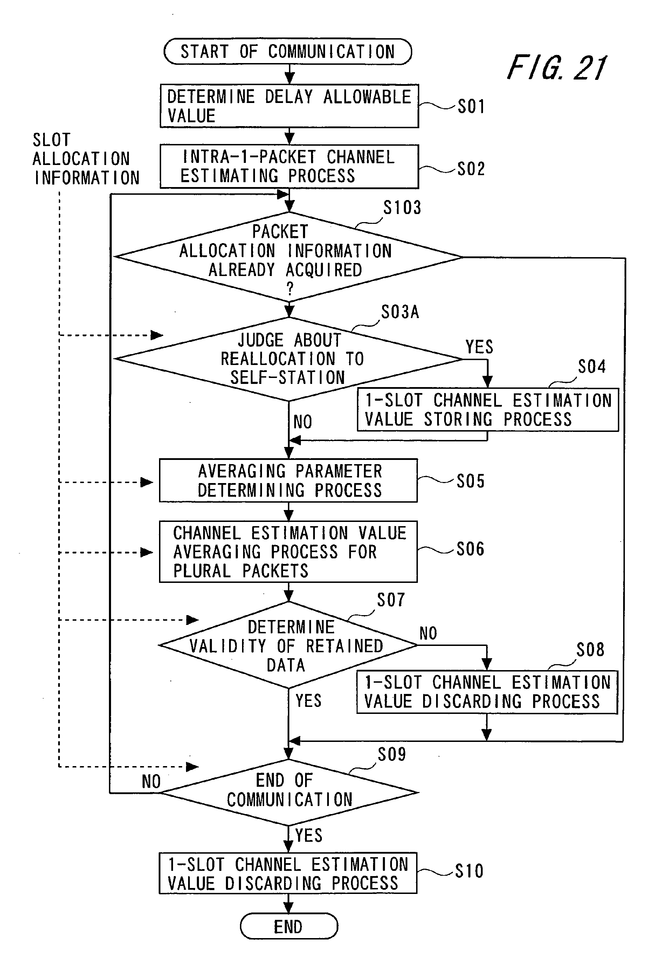

FIG. 21 is a diagram showing an execution flow of a channel estimation value calculating process executed by the terminal station 100 illustrated in FIG. 20A. The process shown in FIG. 21 is the same as the process in the base station 80 shown in FIG. 18 except the following point.

<1>In step S103, it is judged whether or not the retaining unit 24 has already acquired the packet allocation information (the slot allocation information) through the control packet. The process proceeds to step S03A if the packet allocation information has been acquired (S103; Yes), and proceeds to step S09 whereas if not (S103; No).

A processing flow shown in FIG. 21 is given as below. When at the start of the packet channel reception, the delay allowable value restricted by the parameter for the purpose of the communications etc is determined (S01). When starting the communications, the slot allocation information is not yet extracted from the control packet and is therefore, with the channel estimation within one packet being conducted (S02), used as it is for the data demodulation.

In the subsequent packet receiving process, when the control packet is received and when the slot allocation information is acquired, the slot allocation information is referred to, and, if the reallocation of the timeslot to the target terminal station is scheduled from now onwards (S03A; Yes), the intra 1-packet channel estimation value (the 1-slot channel estimation value) is stored in the retaining unit 24. The process thereafter is the same as the process shown in FIG. 18, and hence its explanation is omitted.

In the process shown in FIG. 21, the 1-slot channel estimation value calculated with the packet received before the slot allocation information is acquired, is not stored in the retaining unit 24. The configuration for storing such a 1-slot channel estimation value may, however, be utilized for averaging the channel estimation values, which is executed when the slot allocation information thereafter is acquired.

According to the first and second specific examples of the second embodiment discussed above, the accuracy of the channel estimation value can be improved in the terminal station 80 and in the terminal station 100, and the highly accurate packet demodulating process can be executed. The quality of the downlink packet communications can be thereby improved.

Note that by modifying the configurations illustrated in FIG. 17A and FIG. 20A, the average value of the frequency offset estimation values between the base station and the terminal station can be calculated in the terminal station, and the average value of the arrival direction estimation values of the packet receiving signals is calculated from the plurality of discontinuous timeslots in the terminal station, whereby it is possible to actualize the improvements on the accuracy of the offset estimation value and the accuracy of the arrival direction estimation value.

Further, the configurations explained in the first embodiment and the second embodiment can be properly combined within the range that does not deviate from the purpose of the present invention.

## Claims

1. A wireless base station receiving packet signals at every timeslot from a plurality of wireless terminals, comprising:
a calculating unit calculating, from one packet signal, a parameter used for a process of demodulating the packet signal;
a storage unit stored with the parameter; and
an averaging processing unit calculating, when executing the demodulating process of the packet signal at a certain timeslot with respect to one of the plurality of wireless terminals, an average value of the parameters from the parameter obtained from the packet signal of the certain timeslot and from the parameters stored in the storage unit and obtained from the packet signals at one or more timeslots allocated to the one of the plurality of wireless terminals and discontinuous from the certain timeslot, and outputting the average value as the parameter used for the demodulating process.

2. A wireless base station according to claim 1, further comprising a determining unit determining the plurality of parameters used for calculating the average value in the averaging processing unit on the basis of slot allocation information representing a relationship between the plurality of timeslots and the wireless terminals allocated to the respective timeslots.

3. A wireless base station according to claim 1 or 2, wherein the one or more timeslots discontinuous from the certain timeslot are positioned within a predetermined time range centering at the certain timeslot.

4. A wireless base station according to claim 1, 2 or 3, further comprising a weighting unit weighting, by the standard of the parameter corresponding to the certain timeslot, the plurality of parameters for calculating the average value.

5. A wireless base station according to claim 4, wherein the weighting unit applies a heaviest weight to the parameter corresponding to the certain timeslot, and applies a weight getting smaller as a time interval from the certain timeslot becomes larger to the parameter corresponding to the one or more timeslots.

6. A wireless base station according to any of claims 1 to 5, wherein the parameter is a channel estimation value of a packet signal.

7. A wireless base station according to any of claims 1 to 5, wherein the parameter is a frequency offset estimation value between the wireless base station and the wireless terminal.

8. A wireless base station according to any of claims 1 to 5, wherein the parameter is an arrival direction estimation value of the packet signal.

9. A wireless terminal performing communications with a wireless base station transmitting packet signals to a plurality of wireless terminals at every timeslot, comprising:
a calculating unit calculating, from one packet signal received from the wireless base station and transmitted to a target terminal, a parameter used for a process of demodulating the packet signal;
a storage unit stored with the parameter; and
an averaging processing unit calculating, when executing the demodulating process of the packet signal at a certain timeslot allocated to the target terminal, an average value of the parameters from the parameter obtained from the packet signal and from the parameters stored in the storage unit and obtained from the packet signals at one or more timeslots allocated to the target terminal and discontinuous from the certain timeslot, and outputting the average value as the parameter used for the demodulating process.

10. A wireless terminal according to claim 9, further comprising a determining unit determining the plurality of parameters used for calculating the average value in the averaging processing unit on the basis of slot allocation information representing a relationship between the plurality of timeslots and the wireless terminals allocated to the respective timeslots.

11. A wireless terminal according to claim 9 or 10, wherein the one or more timeslots discontinuous from the certain timeslot are positioned within a predetermined time range centering at the certain timeslot.

12. A wireless terminal according to claim 9, 10 or 11, further comprising a weighting unit weighting, by the standard of the parameter corresponding to the certain timeslot, the plurality of parameters for calculating the average value.

13. A wireless terminal according to claim 12, wherein the weighting unit applies a heaviest weight to the parameter corresponding to the certain timeslot, and applies a weight getting smaller as a time interval from the certain timeslot becomes larger to the parameter corresponding to the one or more timeslots.

14. A wireless terminal according to any of claims 9 to 13, wherein the parameter is a channel estimation value of a packet signal.

15. A wireless terminal according to any of claims 9 to 13, wherein the parameter is a frequency offset estimation value between the wireless base station and the wireless terminal.

16. A wireless terminal according to any of claims 9 to 13, wherein the parameter is an arrival direction estimation value of the packet signal.

17. A wireless terminal according to claim 10, or any of claims 11 to 16 when read as appended to claim 10, wherein the slot allocation information is received via a channel different from the transmission channel for the packet signal.

18. A wireless terminal according to claim 10, or any of claims 11 to 16 when read as appended to claim 10, wherein the slot allocation information embedded in the packet signal is received.
